# EUROPÄISCHE PATENTSCHRIFT

(11) **EP 0 555 185 B1**
(45) Veröffentlichungstag und Bekanntmachung des Hinweises auf die Patenterteilung: **25.01.1995**
(21) Anmeldenummer: 93810062.5
(22) Anmeldetag: 02.02.1993
(51) Int. Cl.: A47J 36/26, A47J 37/06

(54) **Tisch-Kochgerät**
Cooking appliance for table-use
Dispositif de cuisson à mettre sur une table

(30) Priorität: 03.02.1992 CH 297/92
(43) Veröffentlichungstag der Anmeldung: 11.08.1993
(73) Patentinhaber: Gerster, Peter, CH-4310 Rheinfelden (CH); Zimmerli, Kurt, CH-8532 Warth (CH)
(72) Erfinder: Gerster, Peter, CH-4310 Rheinfelden (CH); Zimmerli, Kurt, CH-8532 Warth (CH)
(74) Vertreter: Felber, Josef

(56) Entgegenhaltungen:
- EP-A- 0 054 160
- CH-A- 543 265
- FR-A- 2 656 067

## Beschreibung

Die vorliegende Erfindung betrifft ein Tisch-Kochgerät zum gleichzeitigen Kochen und Grillieren auf dem Speisetisch, sowohl im Hausinnern als auch im Freien oder auf einem Balkon oder einer Terasse. Es sind schon verschiedene Geräte bekannt, mittels derer gewisse Speisen direkt auf dem Speisetisch zubereitet werden können. Bekannt ist zum Beispiel das Fondue-Rechaud, auf dem in einer Keramik-Pfanne, dem sogenannten Fondue-Caquelon, eine Käsemischung durch Erhitzen mittels eines Brennsprit-Brenners oder elektrischer Heizmittel für das Essen flüssig geschmolzen wird. Die Speisenden sitzen in einer Runde um das Rechaud mit der Pfanne und tauchen auf Gabeln aufgespiesste Brotbrocken in den geschmolzenen Käse. Anstelle von Käse-Fondue ist auch das Fondue-Bourgignon bekannt, bei dem das Pfännchen erhitztes Speiseöl enthält, in welchem kleine Fleischhappen, typischerweise Rindsfiletstreifen, gebraten werden. Erwähnt sei auch das Fondue-Chinoise, bei dem das Pfännchen anstelle von Speiseöl eine kochende Bouillon enthält, in welcher Fleischhappen, insbesondere aus Geflügelfleisch, gargekocht werden. Angeregt durch dieses Essen aus der gemeinsamen Pfanne und das mit der eigenen Zubereitung der Esshappen verbundene Vergnügen wurden weitere Geräte für andere Speisen entwickelt. Im Bereich der Käsespeisen gibt es das Raclette-Rechaud. Es besteht aus einem Tischgerät aus zwei horizontalen und zueinander beabstandeten Platten, zwischen welchen kleine flache Pfännchen hineingeschoben werden können, die zur Aufnahme von Raclette-Käsescheiben dienen. Die obere Platte, gegebenenfalls nur die untere oder gar beide sind heizbar und zwischen ihnen wird der Käse im Gerät dickflüssig geschmolzen und oben leicht angebraten. Bekannt ist darüberhinaus ein Raclette-Gerät, dessen obere Platte separat heizbar ist und auf ihrer Oberseite als Grillierfläche ausgebildet ist. Dieses Gerät erlaubt es, Fleisch und Wurstwaren direkt am Tisch in kleinen Essportionen zu grillieren.

Eine Kombination von Grillieren und Kochen bietet ein Tisch-Kochgerät, welches einen bratpfannenförmigen Holzkohlenträger mit Dreibein-Stützen aufweist und darüber in kleinem Abstand einen kegelstumpfförmigen, oben offenen Hut aus Stahlblech mit Löchern, die durch eine Vielzahl von nach aussen und oben gebogenen Dreiangeln gebildet werden. An diese Dreiangeln können Fleischstücke angehängt werden, die so an der heissen Hutoberfläche angebraten werden können. Der Fleischsaft läuft nach unten in eine Rinne, die ähnlich einer Hutkrempe rund um den Hut herum verläuft. In dieser Rinne kann sich ausserdem eine Bouillon befinden, in welcher Gemüse und oder andere Speisen gargekocht werden können.

Der Nachteil dieses Gerätes liegt darin, dass es im Gebrauch infolge des Holzkohlefeuers viel Rauch und Russ erzeugt und daher in Speiseräumen einen unangenehmen Geruch und infolge des durch den Hut abziehenden Rauches einen Russpartikelniederschlag auf die umliegenden Möbel und Einrichtungsgegenstände nach sich zieht. Der Stahl des Hutes wird im Holzkohlefeuer, aber auch bei Verwendung von Pastenbrennern schwarz. Im Gebrauch neigt das Fleisch dazu, am heissen Stahl schwarz anzubrennen. Ausserdem besteht die Gefahr, dass die Fleischstücke während des Bratens von den Haken abfallen und dann in die Bouillon hineinfallen. Im übrigen ist der Hut recht sperrig und das Gerät beansprucht entsprechend viel Platz im Küchenschrank.

Aus der FR-A-2'656'067 ist ein multifunktionales Kochgerät gemäß dem Oberbegriff des Anspruchs 1 oder 2 bekanntgeworden, das also für verschiedene Anwendungszwecke benützt werden kann. Bei dessen Abwandlung für eine bestimmte Funktion, zum Beispiel für das Kochen im Pfännchen, verliert es aber seine Funktion als Grilliergerät, denn der hierzu nötige Grillierstein muss dabei entfernt werden und einer Abdeckung Platz machen, die sich nicht zum Grillieren eignet. Wenn das Gerät als Rechaud benützt wird, ist der Grillierstein nicht mehr aufsetzbar. Mit einem durchgehenden emaillierten Abdeckblech anstelle des Grilliersteines kann das Gerät als Koch- oder Warmhalteplatte verwendet werden. In einer weiteren Variante kann es eine Aluminium-Aufsatzplatte aufweisen, sodass es als Crêperie benützt werden kann. Das Gerät kann also stets nur eine Funktion erfüllen. Das gleichzeitige Kochen oder Warmhalten einerseits und Grillieren andrerseits ist nicht möglich. Ein Problem bei einer solchen Kombination stellt die geforderte thermische Separierung des Kochens und Warmhaltens vom Grillieren dar.

Es ist die Aufgabe der vorliegenden Erfindung, ein Tisch-Kochgerät zu schaffen, das eine optimale Kombination von Kochen und Grillieren auf dem Speisetisch ermöglicht und die oben genannten Nachteile überwindet, indem insbesondere eine thermische Separation für das Kochen oder Warmhalten einerseits und das gleichzeitige Grillieren andrerseits ermöglicht wird.

Diese Aufgabe wird gelöst von einem Tisch-Kochgerät mit den kennzeichnenden Merkmalen des Patentanspruches 1 oder 2.

Vorteilhafte Ausführungen der Erfindung sind in den Zeichnungen dargestellt und werden in der nachfolgenden Beschreibung im einzelnen erläutert und erklärt.

Es zeigt:
- Figur 1 :: Eine Gesamtansicht eines erfindungsgemässen Tisch-Kochgerätes;
- Figur 2 :: Eine Explosionszeichnung des Tisch-Kochgerätes nach Figur 1;
- Figur 3 :: Einen Aufriss mit hälftigem Querschnitt des Tisch-Kochgerätes gemäss Figur 1;
- Figur 4 :: Einen Aufriss mit hälftigem Querschnitt eines Tisch-Kochgerätes mit elektrischer Heizung;
- Figur 5 :: Einen Aufriss mit hälftigem Querschnitt eines Tisch-Kochgerätes mit einer planen Abdeckplatte als Kochplatte;
- Figur 6 :: Einen Aufriss mit hälftigem Querschnitt eines Tisch-Kochgerätes mit einer planen Stein-Grillplatte;
- Figur 7-10:: Je einen Querschnitt von vier verschiedenen Varianten von Tisch-Kochgeräten mit einer durchgehenden Grill- oder Kochplatte ohne zentrales Loch.

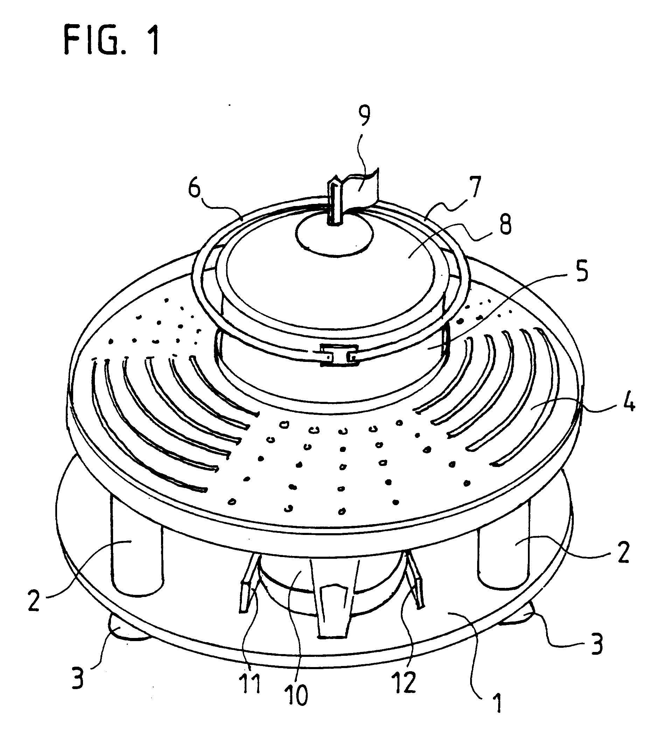

In Figur 1 ist ein erfindungsgemässes Tisch-Kochgerät in einer perspektivischen Gesamtansicht dargestellt. Es weist ein Gestell aus einer horizontalen Grundplatte 1 auf, die an ihrer Peripherie von drei gleichmässig verteilt angeordneten Säulen 2 durchsetzt ist. Die Grundplatte 1 steht so auf einem Dreibein mit rutschfesten Füssen 3 aus gummielastischem Material. Auf die oberen Enden der Säulen 2 ist eine antihaftbeschichtete Grillplatte 4 aus Aluminium-Druckguss aufgelegt, die ein zentrales Loch von etwa dem halben Durchmesser der Grillplatte 4 aufweist. In diesem Loch steht auf einem hier nicht einsehbaren Sternrost, welcher ebenfalls von den Säulen 2 getragen wird, ein Kochtopf 5 aus Chromnickelstahl. Dieser Kochtopf 5 ist hier mit zwei an ihm angebrachten, aufschwenkbaren Tragbügeln 6,7 ausgerüstet. In der Figur 1 sind diese Bügel 6,7 abgeschwenkt und wirken in dieser Lage als Dekorelement des Kopftopfes 5. Mit diesen Tragbügeln 6,7 anstelle eines Pfannenstiels wird ein symmetrisches Erscheinungsbild des ganzen Gerätes erzielt und ausserdem wird vermieden, dass die Tragvorrichtung die Benützer behindern kann, wie das etwa ein Pfannenstiel täte, welcher über die Grillplatte ragen würde. Der Kochtopf 5 weist einen Deckel 8 mit einem hier als Fähnchen ausgestalteten Haltegriff 9 auf. Auf der Grundplatte 1 befinden sich die Heizmittel, hier in Form von drei verteilt angeordneten Brennsprit- oder Pastenbrennern 10. Diese Brenner 10 sind auf der Grundplatte 1 zwischen zwei Leitplanken 11,12 geführt, innerhalb derer sie in bezug auf die Grundplatte 1 in radialer Richtung frei verschiebbar sind. Durch diese Verschiebbarkeit lässt sich die Hitzeverteilung zwischen Kochtopf und Grillplatte 4 regulieren. Je weiter die Brenner 10 nach aussen verschoben werden, umso weniger Hitze steht für den Kopftopf zur Verfügung. Zum Grillieren muss die Grillplatte 4 auf einer Temperatur in der Grössenordnung von 200°C gehalten werden, während der Kochtopf 5 zum Kochen auf etwa 100°C gehalten werden muss. Wenn er bloss zum Warmhalten von Speisen benützt wird, braucht er hingegen bloss auf eine entsprechend tiefere Temperatur erhitzt zu werden.

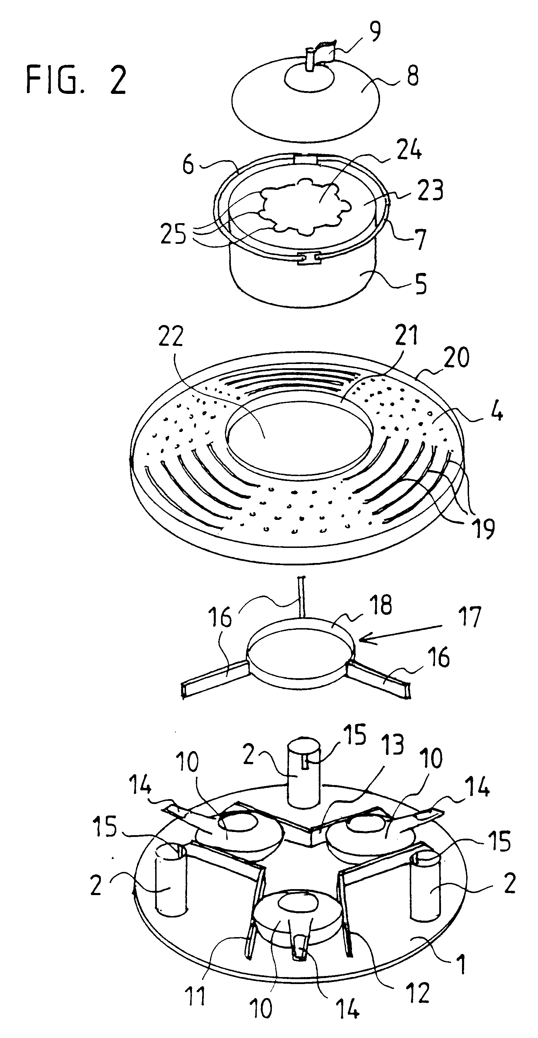

In Figur 2 ist das eben beschriebene Kochgerät in einer Explosionszeichnung dargestellt, die Einblick in die einzelnen Bauteile gewährt. Auf der Grundplatte stehen die drei Brennsprit- oder Pastenbrenner 10. Die Leitplanken sind von drei je in einem 120°-Winkel geknickten Profilen 11,12 und 13 gebildet, die so auf der Grundplatte 1 angeordnet sind, dass drei radial zu ihr verlaufende Schiebebahnen entstehen. Innerhalb dieser Schiebebahnen können die Brenner 10 radial zur Grundplatte 1 verschoben werden, wozu sie an ihren Verstellhebeln 14 ergriffen werden können. Die drei an der Peripherie der Grundplatte 1 mit einem Zwischenwinkel von je 120° angeordneten Säulen 2 sind Stahlrohre, welche mit den rutschfesten Füssen 3 verschraubt sind. An ihren oberen Enden weisen die Säulen 2 gegen das Zentrum der Grundplatte hin gerichtet axiale Schlitze 15 auf. In diese Schlitze 15 passen die Träger 16 eines Rostes 17 zum Tragen des Kochtopfes 5. Dieser Rost 17 besteht aus einem Ring 18 mit drei sternförmig angeordneten Trägern 16. Wenn der Rost 17 mit seinen Trägern 16 in die Schlitze 15 in den Säulenenden eingelegt ist, kann die Grillplatte 4 auf die Säulen 2 gelegt werden. Die Grillplatte 4 ist vorzugsweise aus Aluminium-Druckguss gefertigt. Ihre Oberseite ist von innen nach aussen leicht abwärts geneigt und mit konzentrischen Rillen 19 versehen. Der äussere Rand 20 ist erhöht und bildet eine Umbördelung. Durch diese Gestaltung läuft der Fleischsaft beim Grillieren langsam gegen aussen zu den weniger heissen Rillen ab, wird aber in jeder Rille zurückgehalten, bis diese überläuft, sodass schliesslich über die ganze Grillplatte 4 verteilt stets ein wenig Bratsaft oder Bratöl vorhanden ist. Ausserdem bietet die geneigte Grillierfläche eine bessere Zugänglichkeit und ist gut überblickbar. Der innere Rand 21 der Grillplatte 4 ist ebenfalls etwas nach oben heraufgezogen, sodass ein sauberer Abschluss gegenüber dem Kopftopf 5 erzielt wird. Dieser passt mit etwas Spiel in die Oeffnung 22 in der Grillplatte 4 und steht dann auf dem Rost 17. Durch den Luftspalt zwischen dem inneren Grillplattenrand 21 und dem Kopftopf 5 kann die unten erhitzte Luft längs des Kopftopfes 5 nach oben strömen. Auf den Kopftopf 5 ist hier ein Spritzschutzdeckel 23 aufgesetzt, welcher ein zentrales Loch 24 mit einer Anzahl von Nischen 25 zur Aufnahme und Unterscheidung der einzelnen Essgabeln der Speisenden aufweist. Wird der Kopftopf 5 nur zum Warmhalten benützt, so kann der Deckel 8 aufgesetzt bleiben.

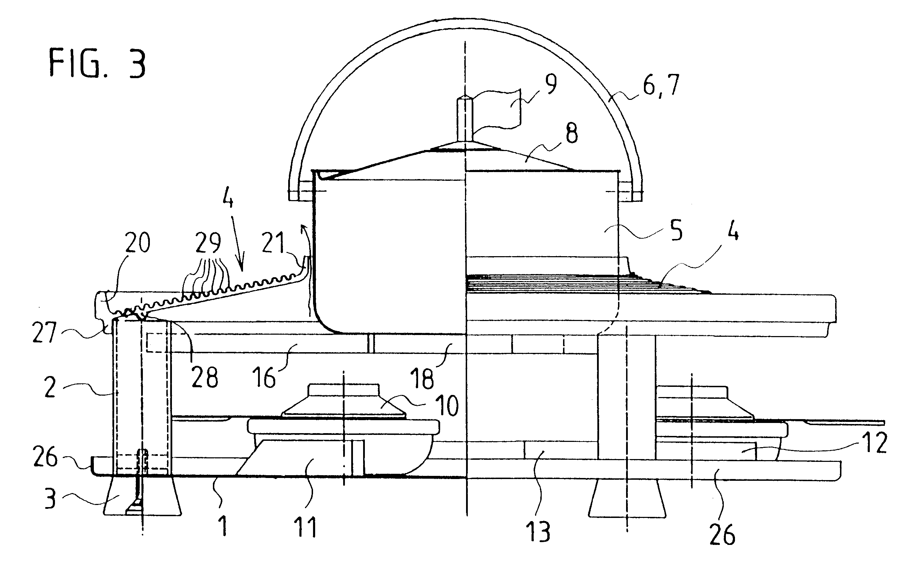

Figur 3 zeigt das nämliche Gerät in einem Aufriss, wobei die linke Hälfte in einem Querschnitt dargestellt ist. Hier ist einsehbar, wie die Säulen 2 mit den Füssen 3 verschraubt sind. Die Grundplatte 1 besteht aus einem Chromstahlblech und ist aussen durch einen leicht hochgezogenen Rand 26 abgeschlossen. Auf der Grundplatte 1 sind die Leitplanken 11,12,13 befestigt und liegen die verschiebbaren Brenner 10. Die Form der Grillplatte 4 ist aus dem gezeigten Querschnitt ersichtlich. Ihr äusserer Rand 20 ist hochgezogen, sodass eine Rinne gebildet wird, in welcher sich der von der geneigten Grillierfläche ablaufende Fleischsaft und das Bratöl schliesslich sammelt. Auch gegen unten gerichtet ist ein Rand 27 gebildet, sodass die Grillplatte 4 unverrückbar auf den Säulen 2 ruht, auf deren Deckel sie mit einem auf der Grillplatten-Unterseite vorhandenen konzentrischen Wulst 28 satt aufliegt. Die Grillierfläche ist mit einer Anzahl von konzentrischen Wulsten 29 versehen, sodass Rillen gebildet werden, in denen sich der Fleischsaft und das Fett oder Oel sammelt, bevor es nach Uebersteigen der jeweiligen Wulsthöhe in die nächstäussere Rille abfliesst. Dadurch ist über die ganze Grillierfläche verteilt stets Saft vorhanden. Der innere Rand 21 der Grillplatte 4 schmiegt sich mit etwas Abstand an den Kochtopf 5 an, sodass durch den so gebildeten Luftspalt heisse Luft von unten nach oben strömen kann, wie das der Pfeil andeutet. In der Figur 3 sind die Tragbügel 6,7 am Kopftopf 5 aufgeschwenkt dargestellt. Der Haltegriff 9 am Kochtopfdeckel 8 hat die Form eines Fähnchens.

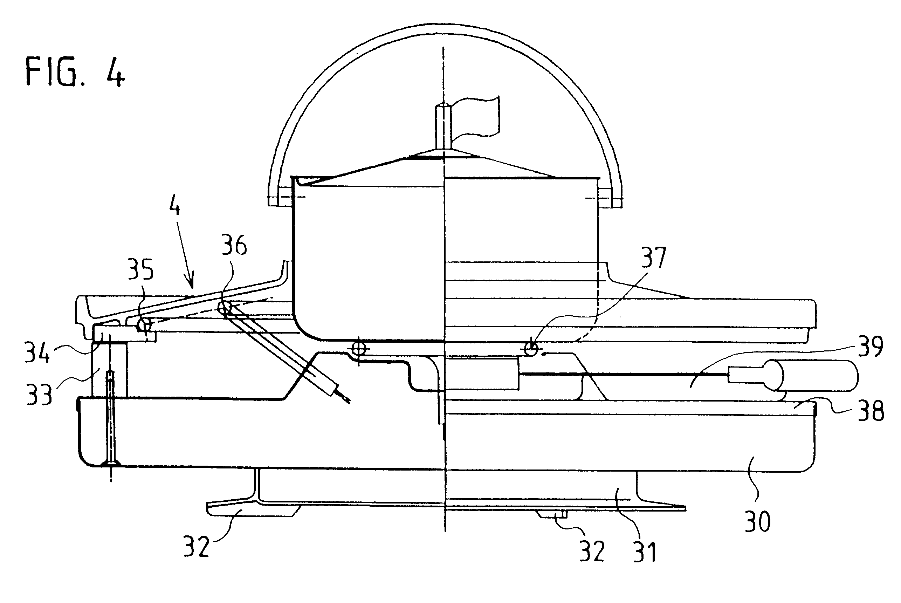

Die Figur 4 zeigt einen Aufriss mit hälftigem Querschnitt eines Tisch-Kochgerätes mit elektrischer Heizung. Das Gestell des Kochgerätes schliesst ein Gehäuse 30 aus lackiertem Stahlblech ein, in welchem die elektrischen Elemente untergebracht sind. Dieses Gehäuse 30 ruht auf einem Kunststoff-Sockel 31 mit drei Füssen 32. Bei Nichtgebrauch des Gerätes kann das elektrische Stromversorgungskabel um diesen Sockel 31 aufgewickelt werden. Der Sockel 31 trägt auch den Kabelanschluss mit Zugentlastung und Klemme. In ähnlicher Weise wie schon zum Gerät nach Figur 1 bis 3 beschrieben sind drei Säulen 33 vorhanden, auf denen je ein Stützelement 34 aus zum Beispiel Stanzblech befestigt ist. Diese drei Stützelemente 34 tragen die Grillplatte 4 und einen äussersten Heizstab-Ring 35. Ein weiterer Heizstab-Ring 36 ist etwas höher und weiter innen angeordnet. Der Kochtopf 5 ruht auf einem gesonderten, kleineren Heizstab-Ring 37, welcher in der Regel mit geringerer elektrischer Leistung versorgt wird. Ueber an der Gehäuse-Peripherie angeordnete Regulierknöpfe lassen sich die Heizleistungen der einzelnen Heizstab-Ringe 35,36 und 37 unabhängig voneinander mittels zweier separater, über Bimetallregler gesteuerte Heizkreise stufenlos einstellen. Der äussere Heizkreis dient zum Beispiel für die Beheizung der Grillplatte oder von darauf stehenden Pfännchen und wird auf eine höhere Leistung eingestellt, während er innere Heizkreis auf niedriger Leistung zum Warmhalten von Speisen verwendet wird. Das Gehäuse 30 ist auf seiner oberen Seite mit einer Chromstahl- oder Aluminium-Abdeckkappe 38 verschlossen und so gegen Schmutz und Ueberhitzung geschützt. Auf diese Abdeckkappe 38 können von aussen kleine Pfännchen 39 aus emailliertem Stahl mit wärmeisolierten Griffen aus Kunststoff oder Holz geschoben werden, die im Grundriss die Form von Ringsegmenten aufweisen, sodass sie in voller Zahl die Abdeckkappe 38 überall bedecken. Mit diesen Pfännchen 39 können separate Speisen durch Oberhitze von den Heizstab-Ringen 35,36 zubereitet werden, zum Beispiel Raclette-Käse.

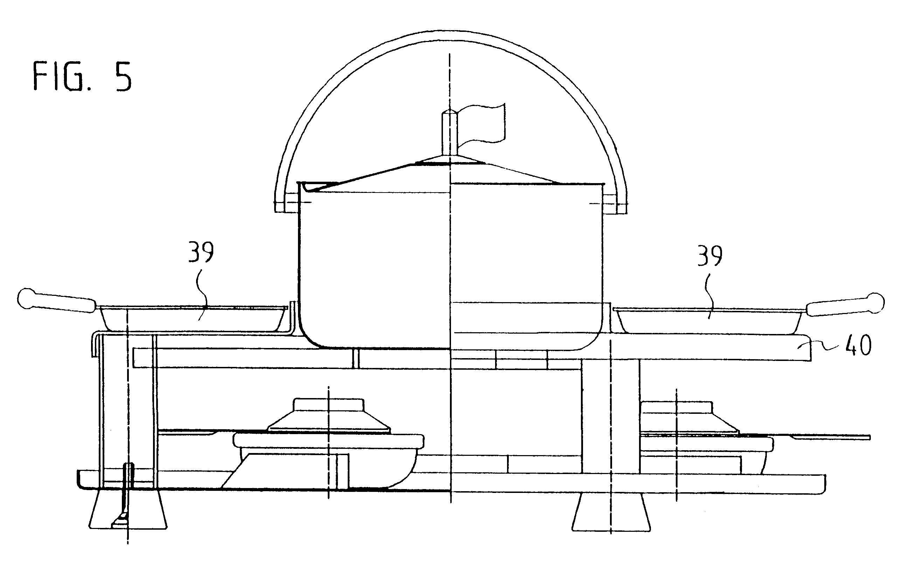

Figur 5 zeigt eine Variante, bei der die Alu-Druckguss-Grillplatte durch eine einfache, plane Aluminium-Abdeckplatte 40 ersetzt ist. Auf diese Abdeckplatte 40 können zum Beispiel Raclette-Pfännchen 39 gelegt werden.

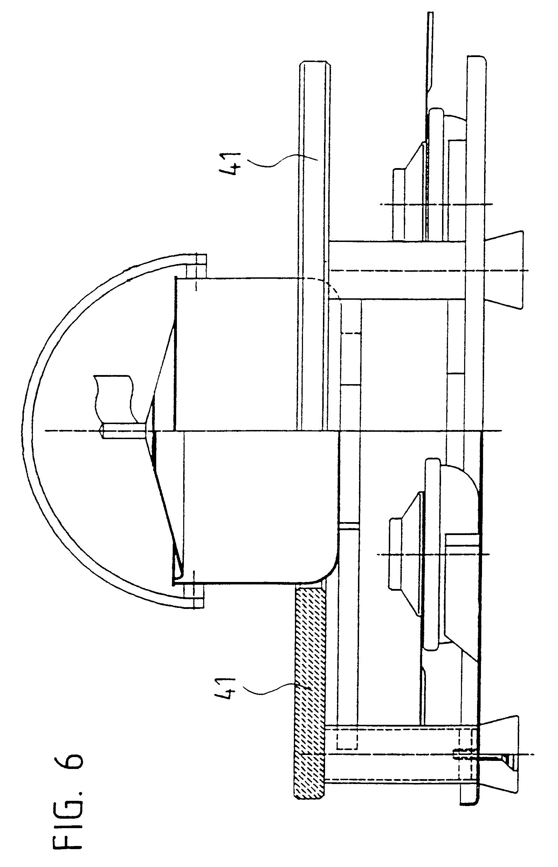

In Figur 6 ist eine Ausführung des Tisch-Kochgerätes gezeigt, die eine plane Grillplatte 41 aus Stein aufweist. Eine Stein-Grillplatte 41 verleiht dem Gerät einen ganz besonders exlusiven und teuren Anstrich. Die Herstellung solcher Steinplatten mit einem zentralen Loch ist in der Tat kostspielig. Sie mag vorallem Liebhaber der leichten Küche ansprechen, weil hier mit einem Miniumum an Fett und Oel grilliert wird.

In einer Variante kann das erfindungsgemässe Tisch-Kochgerät auch aus einem Kochtopf und einer Grill- beziehungsweise Kochplatte bestehen, die einstückig aus Aluminium-Druckguss hergestellt sind. Die Nahtstelle zwischen dem Kochtopf und der Platte kann dabei verjüngt sein, um die Wärmeleitfähigkeit an dieser Stelle zu reduzieren, sodass von der sehr heissen Grillplatte nur verhältnismässig wenig Wärme auf den Kochtopf übergeht. Nebst der Materialverjüngung kann diese Stelle auch mit Schlitzen versehen oder perforiert sein, damit wie schon beschrieben die heisse Luft von unten längs des Kochtopfes nach oben strömen kann. Ein solches Gerät mit einstückig hergestelltem Kochtopf mit Grillplatte ist in der Herstellung besonders kostengünstig.

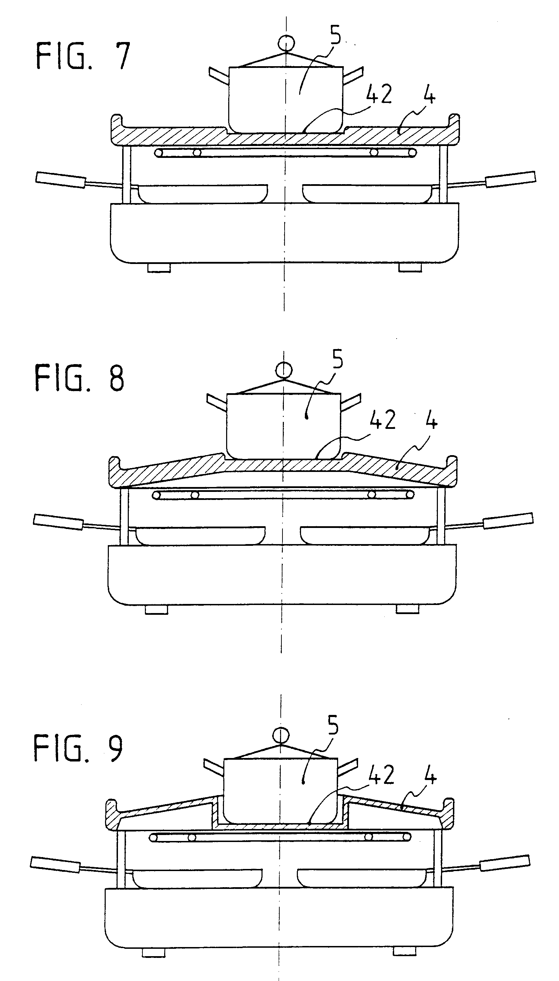

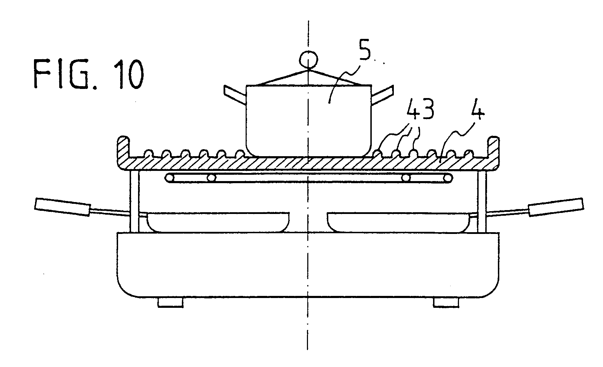

Die Figuren 7 bis 10 zeigen einige Varianten solcher Tisch-Kochgeräte, bei welchen die Grill- oder Kochplatte 4 durchgehend, also ohne zentrales Loch, ausgeführt ist. Beim Gerät nach Figur 7 ist dabei die Platte 4 unten eben und oben weist sie eine kreisrunde Vertiefung 42 auf, die zur Aufnahme des Kochtopfes 5 bestimmt ist, damit dieser nicht verrutschen kann. In Figur 8 ist die Grill- oder Kochplatte 4 gegen die Mitte hin leicht ansteigend ausgeführt, sodass der Bratensaft gegen aussen hin abläuft. In der Mitte der Platte 4 ist wiederum eine kreisrunde, ebene Vertiefung vorhanden, in welche der Kochtopf 5 gestellt werden kann. Das Gerät nach Figur 9 weist eine Grill- oder Kochplatte 4 auf, die bis etwa zur mittigen Höhe des verwendeten Kochtopfes 5 hinaufreicht. Entsprechend tief ist die Vertiefung ausgeführt, in welche der Kochtopf 5 gestellt wird. Eine solche Ausführung kann zum Beispiel mittels Metalldrücken kostengünstig hergestellt werden, während die Platten 4 in den Ausführungen nach den Figuren 7 und 8 gegossen sind und daher teurer sind. Figur 10 zeigt schliesslich noch eine Ausführung mit einer an sich ebenen, durchgehenden und gegossenen Platte 4, die aber auf ihrer Oberseite mit einer Anzahl konzentrisch angeordneter Wulste 43 versehen ist, auf denen das Bratgut zu liegen bestimmt ist, während der Bratsaft zwischen den Wulsten 43 Platz findet. Der innerste Wulst dient dabei als Rand für diejenige Stelle, auf welche der Kopftopf 5 plaziert wird, sodass dieser auf der Platte 4 nicht verrutschen kann.

Das erfindungsgemässe Tisch-Kochgerät ist in einer bisher nicht realisierten Weise multifunktional, indem unzählige Kombinationen von gleichzeitigem Grillieren und Braten einerseits, mit Kochen in Wasser und Bouillons oder Schmoren in Oel andrerseits, ermöglicht werden. Als eigentliches Basis-Rezept erweist sich eine Verbindung von Fondue-Chinoise und Tischgrill. Während auf der runden Grillplatte Fleisch, Fisch oder Wurstwaren brutzeln, kann im zentral angeordneten Kochtopf für alle gut zugänglich ein Gemüse in einer würzigen Bouillon kochen. Nebst dem Kochen oder Schmoren kann der Kochtopf auch zum Warmhalten von verschiedensten Beilage-Speisen wie Gemüse, Teigwaren, Reis, Kartoffeln und dergleichen benützt werden. Selbst das Erhitzen von Raclette-Käse ist mit entsprechenden Pfännchen auf oder je nach Ausführung unter der Grillplatte möglich, während die dazu gehörigen Raclette-Kartoffeln im zentralen Kochtopf warmgehalten werden können. Ohne Grillplatte und Kochtopf verwendet, kann dieses Gerät als sehr vielseitiges Rechaud dienen, indem auf den Ring des Rostes verschiedenste Bratpfannen oder Fondue-Caquelons gestellt werden können. Selbst ein Wok, eine zunehmend auch in der westlichen Welt bekannte fernöstliche Pfanne, kann auf diesen Ring gestellt werden.

Das Tisch-Kochgerät kann gewissermassen als Gourmet-Workstation verstanden werden, die es erlaubt, auch neue, noch unbekannte Rezepte zu entwickeln und eine eigentliche neue Tischkultur rund um das gemeinsame Kochen am Tisch entstehen zu lassen. Die Geselligkeit und das Gespräch wird damit beim Essen mehr in den Vordergrund gerückt, da das Essen sich mit der kreativen, individuellen und happenweisen Zubereitung der Speisen über längere Zeiträume erstreckt, sodass mehr Raum für die Kommunkation und das Gemeinschaftserlebnis geschaffen wird. Die runde Form des erfindungsgemässen Tisch-Kochgerätes bildet ein ideales kulinarisches Zentrum, das von allen Teilnehmern gleichwertig und bequem bedient werden kann. Insbesondere bei Einladungen wird der Gastgeber oder die Gastgeberin nicht mehr teilweise vom Essen ausgegrenzt, wie das bei der konventionellen Küche der Fall ist, wo der Koch oder die Köchin auch während dem Tafeln ständig auf Draht sein muss. Hier kann man als Gastgeber alles vorbereiten und danach seine Zeit voll mit den Gästen verbringen. Der einzelne Gast hat zudem die Möglichkeit, die Speisen nach seinem Geschmack selbst zu wählen und zu würzen und kann ungezwungen mehr oder weniger speisen, ohne sich einer oft gutgemeinten, jedoch unangenehmen Kontrolle ausgesetzt zu fühlen.

Dank seinem baukastenartigen Aufbau kann das Gerät leicht und rasch auseinandergenommen werden und die Einzelteile können mühelos gereinigt werden. Im Küchenschrank nimmt es in demontierten Zustand wenig Platz ein und kann bei Bedarf rasch zusammengebaut werden.

## Patentansprüche

1. Tisch-Kochgerät mit einem Gestell, in welchem Heizmittel (10;35,36,37) mit regulierbarer Heizleistung angeordnet sind, sowie einer darauf angeordneten Grill- (4;41) oder Kochplatte (39;41), dadurch gekennzeichnet, dass ein zentraler Kochtopf (5) und eine darum herum angeordnete Grillplatte (4;41) oder Kochplatte (39;41) vorhanden sind, wobei die Grill- (4;41) oder Kochplatte (39;41) mit einem zentralen Loch (22) versehen ist, das zur Aufnahme des Kochtopfes (5) bestimmt ist, sowie dass die Heizung des Kochtopfes (5) einerseits und der darum herum angeordneten Grillplatte (4;41) oder Kochplatte (39;41) andrerseits thermisch separiert ist.

2. Tisch-Kochgerät mit einem Gestell, in welchem Heizmittel (10;35,36,37) mit regulierbarer Heizleistung angeordnet sind, sowie einer darauf angeordneten Grill- (4;41) oder Kochplatte (39;41), dadurch gekennzeichnet, dass ein zentraler Kochtopf (5) und eine darum herum angeordnete Grillplatte (4;41) oder Kochplatte (39;41) vorhanden sind, wobei diese eine einstückige Platte bildet, die in der Mitte einen Bereich aufweist, auf den der Kochtopf (5) zu stellen bestimmt ist, und wobei dieser Bereich mittels einer Nahtstelle zur Reduktion der Wärmeleitfähigkeit vom äusseren Teil der Platte abgegrenzt ist, indem diese Nahtstelle verjüngt, perforiert oder mit Schlitzen versehen ist, sowie dass die Heizung des Kochtopfes (5) einerseits und der darum herum angeordneten Grillplatte (4;41) oder Kochplatte (39;41) andrerseits thermisch separiert ist.

3. Tisch-Kochgerät nach Anspruch 1, dadurch gekennzeichnet, dass das Gestell eine horizontale Grundplatte (1) aufweist, die an ihrer Peripherie von drei gleichmässig verteilt angeordneten Säulen (2) durchsetzt ist, derart, dass die Grundplatte (1) auf einem Dreibein steht, sowie einen Rost (17) zum Tragen des Kochtopfes (5) aus einem Ring (18) mit aussen drei sternförmig angeordneten Trägern (16), die in Schlitzen (15) auf den oberen Säulenenden aufliegen und die Grill- (4;41) oder Kochplatte (39;41) tragen.

4. Tisch-Kochgerät nach Anspruch 2, dadurch gekennzeichnet, dass das Gestell eine horizontale Grundplatte (1) aufweist, die an ihrer Peripherie von drei gleichmässig verteilt angeordneten Säulen (2) durchsetzt ist, derart, dass die Grundplatte (1) auf einem Dreibein steht, sowie einen Rost (17) zum Tragen des Kochtopfes (5) aus einem Ring (18) mit aussen drei sternförmig angeordneten Trägern (16), die in Schlitzen (15) aus den oberen Säulenenden aufliegen und die Grill-(4;41) oder Kochplatte (39;41) tragen.

5. Tisch-Kochgerät nach einem der Ansprüche 1 bis 4, dadurch gekennzeichnet, dass die Grillierfläche der Grillplatte (4) konzentrische Rillen (29) aufweist und in radialer Richtung nach aussen abfällt, und die Grillplatte (4) einen erhöhten Rand (20) aufweist.

6. Tisch-Kochgerät nach einem der Ansprüche 1 bis 5, dadurch gekennzeichnet, dass die Heizmittel drei Brennsprit- oder Pasten-Brenner (10) sind, welche auf der Grundplatte (1) zur thermischen Separierung und Regulierung der Heizleistung zwischen dort angeordneten Leitplanken (11,12,13) radial verschiebbar sind.

7. Tisch-Kochgeräte nach einem der Ansprüche 1 bis 5, dadurch gekennzeichnet, dass die Heizmittel elektrische Heizstab-Ringe (35,36;37) sind, welche unterhalb der Grillplatte (4) und des Kochtopfes (5) verlaufen, wobei die elektrischen Elemente in einem Gehäuse (30) untergebracht sind, das oben mit einer Abdeckkappe (38) verschlossen ist, welche als Kochplatte mit Oberhitze benützbar ist, und dass die Heizleistungen der Heizstab-Ringe (35,36) für die Grillplatte (4) einerseits und des Heizstab-Ringes (37) für den Kopftopf andrerseits separat regulierbar sind.

8. Tisch-Kochgerät nach Anspruch 1 oder 3, dadurch gekennzeichnet, dass die Kochplatte (40;41) eine ebene Scheibe aus Aluminiumdruckguss oder aus Stein ist, die ein zentrales Loch aufweist, wobei der innere und der äussere Rand der Scheibe überhöht ist.

9. Tisch-Kochgerät nach Anspruch 2, dadurch gekennzeichnet, dass die Kochplatte (40;41) eine ebene, durchgehende Scheibe aus Aluminiumdruckguss oder aus Stein ist, welche aussen einen erhöhten Rand (20) aufweist.

10. Tisch-Kochgerät nach einem der vorhergehenden Ansprüche, dadurch gekennzeichnet, dass der zentrale Kochtopf (5) aus Chromnickelstahl gefertigt ist und mit zwei an ihm angebrachten, aufschwenkbaren Tragbügeln (6,7) ausgerüstet ist.

## Claims

1. Table cooking appliance with a stand in which heating elements (10;35,36,37) with an adjustable heat output are disposed, and a grill plate (4;41) or hotplate (39;41) disposed thereupon, characterized in that there is a central pan (5) and a grill plate (4;41) or hotplate (39;41) disposed around it, the grill plate (4;41) or hotplate (39;41) being provided with a central hole (22) intended to accommodate the pan (5), and in that the heat for the pan (5) on the one hand and for the grill plate (4;41) or hotplate (39;41) disposed around it on the other hand are thermally separated.

2. A table cooking appliance with a stand in which heating elements (10;35,36,37) with an adjustable heat output are disposed, and a grill plate (4;41) or hotplate (39;41) disposed thereupon, characterized in that there is a central pan (5) and a grill plate (4;41) or hotplate (39;41) disposed around it, the latter forming a one-piece plate with a portion in the middle on which the pan (5) is intended to be placed, and this portion being bordered off from the outer part of the plate by means of a seam to reduce the thermal conductivity, this seam being tapered, perforated or provided with slots, and in that the heat for the pan (5) on the one hand and for the grill plate (4;41) or hotplate (39;41) disposed around it on the other hand are thermally separated.

3. The table cooking appliance of claim 1, characterized in that the stand has a horizontal base plate (1) which is transversed on its periphery by three equally spaced columns (2) such that the base plate (1) stands on a three-legged support, and has a grid (17) to support the pan (5) consisting of a ring (18) with three arms (16) disposed on the outside in a star shape, which rest in slots (15) on the top of the column ends and which support the grill plate (4;41) or hotplate (39;41).

4. The table cooking appliance of claim 2, characterized in that the stand has a horizontal base plate (1) which is transversed on its periphery by three equally spaced columns (2) such that the base plate (1) stands on a three-legged support, and has a grid (17) to support the pan (5) consisting of a ring (18) with three arms (16) disposed on the outside in a star shape, which rest in slots (15) on the top of the column ends and which support the grill plate (4;41) or hotplate (39;41).

5. The table cooking appliance of one of claims 1 to 4, characterized in that the grill surface of the grill plate (4) has concentric grooves (29) and declines in a radial direction towards the exterior, and the grill plate (4) has a raised rim (20).

6. The table cooking appliance of one of claims 1 to 5, characterized in that the heating elements are three methylated spirits or paste burners (10) which can be radially displaced on the base plate (1) between guide barriers (11,12,13) disposed there, to thermally separate and regulate the heat output.

7. The table cooking appliance of one of claims 1 to 5, characterized in that the heating elements are electric bar-heater rings (35,36;37) which run underneath the grill plate (4) and the pan (5), the electric elements being accommodated in a housing (30) which is closed off by a cover (38) which can be used as a hotplate with surface heat, and in that the heat outputs of the bar-heater rings (35,36) for the grill plate (4) on the one hand and of the bar-heater ring (37) for the pan on the other hand can be separately regulated.

8. The table cooking appliance of claim 1 or 3, characterized in that the hotplate (40;41) is a flat slab made of aluminium die casting or of stone, which has a central hole, the inner and the outer rim of the slab being raised.

9. The table cooking device of claim 2, characterized in that the hotplate (40;41) is a flat, continuous slab made of aluminium die casting or of stone, which has a raised outer rim (20).

10. The table cooking appliance of one of the previous claims, characterized in that the central pan (5) is made of nickel chromium steel and is fitted with two pivotable carry elements (6,7) attached to it.

## Revendications

1. Réchaud de table comportant un bâti, dans lequel sont disposés des moyens de chauffage (10; 35, 36, 37) dont la puissance de chauffe est régulable, ainsi qu'une plaque de gril (4; 41) ou de cuisson (39; 41) disposée dessus, caractérisé en ce qu'il est prévu un récipient central de cuisson (5) ainsi qu'une plaque de gril (4; 41) ou de cuisson (39; 41) disposée tout autour, la plaque de gril (4; 41) ou de cuisson (39; 41) comportant une ouverture centrale (22), destinée à recevoir le récipient de cuisson (5), et en ce que les chauffages du récipient de cuisson (5) d'une part et de la plaque de gril (4; 41) ou de cuisson (39; 41) disposée tout autour d'autre part sont séparés thermiquement.

2. Réchaud de table comportant un bâti, dans lequel sont disposés des moyens de chauffage (10; 35, 36, 37) dont la puissance de chauffe est régulable, ainsi qu'une plaque de gril (4; 41) ou de cuisson (39; 41) disposée dessus, caractérisé en ce qu'il est prévu un récipient central de cuisson (5) ainsi qu'une plaque de gril (4; 41) ou de cuisson (39; 41) disposée tout autour, celle-ci constituant une plaque d'une pièce, présentant au milieu un emplacement destiné à recevoir le récipient de cuisson (5), cet emplacement étant délimité par rapport à la partie extérieure de la plaque par une zone de contact pour la réduction de la conductibilité thermique, cette zone de contact étant rétrécie, perforée ou munie de fentes, et en ce que le chauffage du récipient de cuisson (5) d'une part et la plaque de gril (4; 41) ou de cuisson (39; 41), disposée tout autour, d'autre part sont séparés thermiquement.

3. Réchaud de table suivant la revendication 1, caractérisé en ce que le bâti présente une plaque de base horizontale (1), traversée sur son pourtour par trois colonnes (2) réparties régulièrement, de manière que la plaque de base (1) repose sur un trépied, le bâti présentant aussi une grille (17) destinée à porter le récipient de cuisson (5) et composée d'un anneau (18) avec des supports (16), disposés extérieurement en étoile, reposant dans des fentes (15) pratiquées sur les extrémités des colonnes et portant la plaque de gril (4; 41) ou de cuisson (39; 41).

4. Réchaud de table suivant la revendication 2, caractérisé en ce que le bâti présente une plaque de base horizontale (1), traversée sur son pourtour par trois colonnes (2) réparties régulièrement, de manière que la plaque de base (1) repose sur un trépied, le bâti présentant aussi une grille (17) destinée à porter le récipient de cuisson (5) et composée d'un anneau (18) avec des supports (16), disposés extérieurement en étoile, reposant dans des fentes (15) pratiquées sur les extrémités des colonnes et portant la plaque de gril (4; 41) ou de cuisson (39; 41).

5. Réchaud de table suivant une des revendications 1 à 4, caractérisé en ce que la surface de grillage de la plaque de gril (4) présente des rainures concentriques (29) et qu'elle est penchée radialement vers l'extérieur, cependant que la plaque de gril (4) présente un bord surélevé (20).

6. Réchaud de table suivant une des revendications 1 à 5, caractérisé en ce que les moyens de chauffage sont trois brûleurs (10) à alcool ou à pâte, déplaçables radialement - pour la séparation thermique et pour la régulation de la puissance de chauffage - sur la plaque de base (1), entre des glissières (11, 12, 13) qui y sont placées.

7. Réchaud de table suivant une des revendications 1 à 5, caractérisé en ce que les moyens de chauffage sont des anneaux (35, 36, 37) constitués par des résistances chauffantes, s'étendant au-dessous de la plaque de gril (4) et du récipient de cuisson (5), ces éléments électriques étant logés dans un boîtier (30), fermé par un couvercle (38), utilisable comme plaque de cuisson au moyen d'un chauffage par le dessus et en ce que les puissances de chauffe des anneaux de chauffage (35, 36) pour la plaque de gril (4) d'une part ainsi que de l'anneau de chauffage (37) pour le récipient de cuisson d'autre part sont régulables séparément.

8. Réchaud de table suivant la revendication 1 ou 3, caractérisé en ce que la plaque de cuisson (40; 41) est un disque plan en fonte d'aluminium coulée sous pression ou en pierre, cependant que ce disque comporte une ouverture centrale et que les bords intérieur et extérieur du disque sont surélevés.

9. Réchaud de table suivant la revendication 2, caractérisé en ce que la plaque de cuisson (40; 41) est un disque plan, s'étendant sur toute la surface, en fonte d'aluminium coulée sous pression ou en pierre, son bord extérieur (20) étant surélevé.

10. Réchaud de table suivant une des revendications précédentes, caractérisé en ce que le récipient central de cuisson (5) est en acier au chrome nickel et qu'il est muni de deux anses (6, 7) pouvant pivoter vers le haut.
